(19) Europäisches Patentamt
European Patent Office
Office européen des brevets

(11) EP 4 663 703 A1

(12) EUROPEAN PATENT APPLICATION
published in accordance with Art. 153(4) EPC

(43) Date of publication:
**17.12.2025 Bulletin 2025/51**

(21) Application number: **24753346.6**

(22) Date of filing: **06.02.2024**

(51) International Patent Classification (IPC):
***C08L 77/06*** (2006.01) ***C08G 69/26*** (2006.01)
***C08K 5/5313*** (2006.01) ***C08K 7/14*** (2006.01)
***C08K 9/04*** (2006.01) ***C08K 9/08*** (2006.01)

(52) Cooperative Patent Classification (CPC):
**C08G 69/26; C08K 5/5313; C08K 7/14; C08K 9/04; C08K 9/08; C08L 77/06**

(86) International application number:
**PCT/JP2024/003882**

(87) International publication number:
**WO 2024/166903 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023 JP 2023016026**

(71) Applicant: **Mitsui Chemicals, Inc.**
**Tokyo 104-0028 (JP)**

(72) Inventors:
- **TAKAMATSU, Kodai**
  **Sodegaura-shi, Chiba 299-0265 (JP)**
- **WASHIO, Isao**
  **Sodegaura-shi, Chiba 299-0265 (JP)**
- **KONDO, Takahiro**
  **Sodegaura-shi, Chiba 299-0265 (JP)**
- **NOGUCHI, Shota**
  **Sodegaura-shi, Chiba 299-0265 (JP)**
- **DOI, Haruka**
  **Sodegaura-shi, Chiba 299-0265 (JP)**

(74) Representative: **Hoffmann Eitle**
**Patent- und Rechtsanwälte PartmbB**
**Arabellastraße 30**
**81925 München (DE)**

# (54) POLYAMIDE RESIN COMPOSITION AND MOLDED ARTICLE

(57) This polyamide resin composition comprises a polyamide resin (A), a phosphorus compound (B), and glass fibers (C) containing a surface treatment agent or a sizing agent. The phosphorus element content of the polyamide resin composition is 500 to 10,000 ppm by mass with respect to the polyamide resin composition.

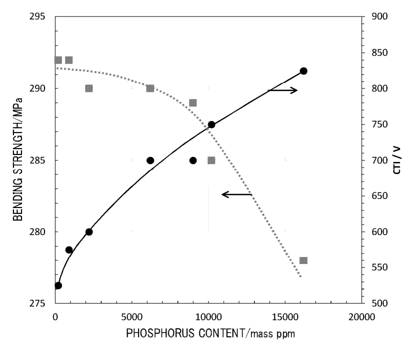


Figure

EP 4 663 703 A1

## Description

### Technical Field

The present invention relates to a polyamide resin composition and a molded article.

### Background Art

Polyamide resin compositions have excellent moldability, mechanical properties, and chemical resistance and therefore have been widely used as materials for various applications such as clothing, industrial materials, automobiles, electrical/electronic parts, and industrial parts.

Various additives are added to a polyamide resin composition in order to provide properties corresponding to respective applications to the polyamide resin composition. For example, it is known to blend reinforcing materials such as glass fibers to increase the mechanical strength of polyamide resin compositions.

Such glass fibers may be treated with a sizing agent or a surface treatment agent for the purpose of increasing dispersibility in a polyamide resin. Examples of the sizing agent or the surface treatment agent for glass fibers include epoxy compounds, amine compounds, urethane compounds, and carboxylic acid compounds.

In addition, flame retardants may be added to impart flame resistance. For example, PTL 1 discloses a resin composition including a specific semi-aromatic polyamide, polyphenylene ether, a phosphazene compound and a phosphinate salt as a flame retardant, and glass fibers. PTL 1 suggests that excellent flame resistance can be obtained by using a phosphazene compound and a phosphinate in combination as a flame retardant. In the Examples and Comparative Examples of PTL 1, the sum of the amount of a phosphazene compound and the amount of a phosphinate salt in the resin composition is about 8 to 15% mass%, and the content of phosphorus element derived from these compounds is calculated to be 1.37 mass % at the lowest content.

PTL 2 discloses a flame-retardant polyamide resin composition including 30 to 80 weight% of a polyamide resin, 1 to 30 weight% of an adduct of melamine and phosphoric acid, 1 to 30 weight% of a specific phosphinate salt, 0.01 to 5 weight% of a monoester derivative of polyalkylene polyol and higher fatty acid, and 5 to 40 weight% of an inorganic filler. PTL 2 suggests that by using 1 to 30 weight% of an adduct of melamine and phosphoric acid in combination with a specific phosphinate salt, not only flame resistance but also tracking resistance can be increased. In the Examples and Comparative Examples of PTL 2, the content of the phosphorus element derived from polyphosphoric acid melamine and phosphinate salt in the flame-retardant polyamide resin composition is calculated to be 1.96 to 3.7 mass%.

### Citation List

#### Patent Literature

PTL 1
WO2008/081878
PTL 2
Japanese Patent Application Laid-Open No. 2004-292531

### Summary of Invention

#### Technical Problem

In electrical and electronic components used in high-voltage environments, for example, high tracking resistance is required. According to the studies by the present inventors, the tracking resistance can be significantly increased by adding a large amount of a phosphorus compound to a polyamide resin composition. However, a new problem has been found in that when a large amount of a phosphorus compound is added to a polyamide resin composition containing glass fibers treated with a surface treatment agent or a sizing agent, the mechanical strength (particularly the bending strength) of the polyamide resin composition decreases.

In view of these circumstances, the purpose of the present invention is to provide a polyamide resin composition having high tracking resistance while maintaining satisfactory mechanical strength, and a polyamide molded article containing the polyamide resin composition.

Solution to Problem

The present invention relates to the following polyamide resin composition and molded article.

[1] A polyamide resin composition, including: a polyamide resin (A) having a melting point of 280°C or higher as measured by a differential scanning calorimeter (DSC); a phosphorus compound (B); and a glass fiber (C) including a surface treatment agent or a sizing agent, in which a content of a phosphorus element in the polyamide resin composition is 500 mass ppm or more and 10,000 mass ppm or less with respect to the polyamide resin composition.
[2] The polyamide resin composition according to [1], in which the surface treatment agent or the sizing agent has an acidic group.
[3] The polyamide resin composition according to [2], in which the acidic group is a carboxy group, an acid anhydride group, or a carboxylic acid ester group.
[4] The polyamide resin composition according to [2] or [3], in which the surface treatment agent or the sizing agent includes a urethane resin and a compound having the acidic group.
[5] The polyamide resin composition according to any one of [1] to [4], in which the phosphorus compound (B) includes a phosphinate compound.
[6] The polyamide resin composition according to [5], in which the phosphinate compound is at least one member selected from the group consisting of compounds represented by Formula (I), compounds represented by Formula (II), and condensates thereof:

[Chemical Formula 1]

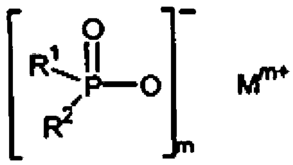

... Formula (I)

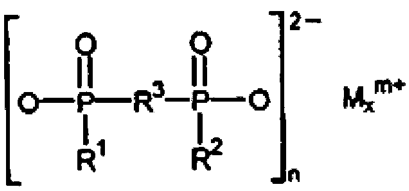

... Formula (II)

[In Formula (I) and Formula (II),

$R^1$ and $R^2$ are each a C1-C6 alkyl group or an aryl group,
$R^3$ is a C1-C10 alkylene group, a C6-C10 arylene group, a C6-C10 alkylarylene group, or a C6-C10 arylalkylene group,
M is one member selected from the group consisting of Mg, Ca, Al, Sb, Sn, Ge, Ti, Zn, Fe, Zr, Ce, Bi, Sr, Mn, Li, Na, K, and protonated nitrogen bases, and
m represents an integer of 1 to 4, n represents an integer of 1 to 4, and x represents an integer of 1 to 4].

[7] The polyamide resin composition according to any one of [1] to [6], in which the phosphorus compound (B) includes aluminum diethylphosphinate.
[8] The polyamide resin composition according to any one of [1] to [7], in which a heat of fusion (ΔH) of the polyamide resin (A) as measured by differential scanning calorimeter (DSC) is 10 J/g or more.
[9] The polyamide resin composition according to any one of [1] to [8], in which the polyamide resin (A) includes a dicarboxylic acid-derived component unit (Aa) and a diamine-derived component unit (Ab); and the dicarboxylic acid-derived component unit (Aa) includes a component unit derived from an aromatic dicarboxylic acid.
[10] The polyamide resin composition according to any one of [1] to [9], in which the polyamide resin (A) includes a dicarboxylic acid-derived component unit (Aa) and a diamine-derived component unit (Ab); and the dicarboxylic acid-derived component unit (Aa) includes a component unit derived from terephthalic acid and a component unit derived from isophthalic acid.

[11] The polyamide resin composition according to any one of [1] to [10], in which a content of the phosphorus compound (B) is 0.5 mass% or more and less than 5 mass% with respect to the polyamide resin composition.

[12] The polyamide resin composition according to any one of [1] to [11], in which a content of the glass fiber (C) is 25 mass% or more and 60 mass% or less with respect to the polyamide resin composition.

[13] A molded article containing the polyamide resin composition according to any one of [1] to [12].

Advantageous Effects of Invention

The present invention can provide a polyamide resin composition having high tracking resistance while maintaining satisfactory mechanical strength, and a polyamide molded article containing the polyamide resin composition.

Brief Description of Drawings

The Figure is a graph plotting the results obtained in the Examples and Comparative Examples.

Description of Embodiments

1. Polyamide Resin Composition

The polyamide resin composition includes a polyamide resin (A), a phosphorus compound (B), and glass fibers (C) that include a surface treatment agent or a sizing agent.

1-1. Polyamide resin (A)

The polyamide resin (A) includes a component unit (Aa) derived from a dicarboxylic acid (herein, a component unit derived from a dicarboxylic acid is also simply referred to as "dicarboxylic acid-derived component unit") and a component unit (Ab) derived from a diamine (herein, a component unit derived from a diamine is also simply referred to as "diamine-derived component unit").

[Dicarboxylic acid-derived component unit (Aa)]

The dicarboxylic acid-derived component unit (Aa) preferably includes a component unit derived from an aromatic dicarboxylic acid or an alicyclic dicarboxylic acid, and more preferably includes a component unit derived from an aromatic dicarboxylic acid. When the polyamide resin (A) includes a component unit derived from an aromatic dicarboxylic acid or an alicyclic dicarboxylic acid as the dicarboxylic acid-derived component unit (Aa), the melting point (Tm) and crystallinity can be sufficiently increased, and when the polyamide resin (A) includes a component unit derived from an aromatic dicarboxylic acid, the melting point (Tm) and crystallinity can be more sufficiently increased.

Examples of the aromatic dicarboxylic acid include terephthalic acid, isophthalic acid, naphthalene dicarboxylic acid, and esters thereof. Examples of the alicyclic dicarboxylic acid include cyclohexanedicarboxylic acid and esters thereof.

In the present embodiment, the dicarboxylic acid-derived component unit (Aa) preferably includes a component unit (Aa1) derived from terephthalic acid, naphthalene dicarboxylic acid, or cyclohexanedicarboxylic acid. Such a component unit (Aa1), unlike isophthalic acid, can increase the crystallinity of the polyamide. The content of such a component unit (Aa1) is preferably more than 20 mol% and 100 mol% or less based on the total molar number of the dicarboxylic acid-derived component unit (Aa), from the viewpoint of obtaining satisfactory crystallinity of the polyamide resin. From the viewpoint of further increasing the crystallinity of the polyamide resin (A), the content of the component unit (Aa1) is preferably 45 mol% or more and 100 mol% or less based on the total molar number of the dicarboxylic acid-derived component unit (Aa), more preferably 50 mol% or more and 99 mol% or less, and even more preferably more than 60 mol% and 80 mol% or less. Among them, from the viewpoint of obtaining a polyamide resin with high crystallinity and high heat resistance, the component unit (Aa1) is more preferably a component unit derived from terephthalic acid.

The dicarboxylic acid-derived component unit (Aa) may further include a component unit (Aa2) derived from an aromatic dicarboxylic acid other than those of the above component unit (Aa1) or a component unit (Aa3) derived from an aliphatic dicarboxylic acid having 4 to 18 carbon atoms, as long as it does not impair the effects of the present invention.

Examples of the component unit (Aa2) derived from an aromatic dicarboxylic acid other than terephthalic acid include component units derived from isophthalic acid and 2-methylterephthalic acid, and preferably include component units derived from isophthalic acid. When the polyamide resin (A) includes the component unit (Aa2), the content of the

component unit (Aa2) is preferably 1 mol% or more and 50 mol% or less based on the total molar number of the dicarboxylic acid-derived component unit (Aa), more preferably 10 mol% or more and 40 mol% or less, even more preferably 15 mol% or more and 40 mol% or less, and particularly preferably 20 mol% or more and 40 mol% or less, from the viewpoint of obtaining satisfactory crystallinity of the polyamide resin.

The component unit (Aa3) derived from an aliphatic dicarboxylic acid is a component unit derived from an aliphatic dicarboxylic acid having an alkylene group having 4 to 18 carbon atoms, and is preferably a constituent unit derived from an aliphatic dicarboxylic acid having an alkylene group having 6 to 12 carbon atoms. Examples of the aliphatic dicarboxylic acid include malonic acid, dimethylmalonic acid, succinic acid, glutaric acid, adipic acid, 2-methyladipic acid, trimethyladipic acid, pimelic acid, 2,2-dimethylglutaric acid, 3,3-diethylsuccinic acid, azelaic acid, sebacic acid, and suberic acid. A component unit derived from adipic acid and a component unit derived from sebacic acid are preferred. Among these, adipic acid and sebacic acid are preferred. When the polyamide resin (A) includes a component unit (Aa3), the content of the component unit (Aa3) is preferably 0 mol% or more and 40 mol% or less based on the total molar number of the dicarboxylic acid-derived component unit (Aa), more preferably 0 mol% or more and 20 mol% or less, even more preferably 1 mol% or more and 10 mol% or less, and particularly preferably 1 mol% or more and 5 mol% or less, from the viewpoint of obtaining satisfactory crystallinity of the polyamide resin.

Among the component units (Aa2) and (Aa3), from the viewpoint of maintaining the melting point of the polyamide resin (A) while appropriately lowering crystallinity, the dicarboxylic acid-derived component unit (Aa) preferably further includes the component unit (Aa2), and more preferably includes a component unit derived from isophthalic acid as the component unit (Aa2).

The polyamide resin (A) may further contain a small amount of a tribasic or higher polybasic carboxylic acid component unit, such as trimellitic acid or pyromellitic acid, in addition to the above-described component units (Aa1), (Aa2), and (Aa3). The content of such a polybasic carboxylic acid component unit may be 0 mol% or more and 5 mol% or less based on the total molar number of the dicarboxylic acid-derived component unit (Aa).

[Diamine-derived component unit (Ab)]

The diamine-derived component unit (Ab) preferably includes a component unit (Ab1) derived from a linear alkylene diamine having 4 to 18 carbon atoms, and may further include a component unit (Ab2) derived from an alkylene diamine having a side chain alkyl group and having 4 to 18 carbon atoms, or a component unit (Ab3) derived from a cycloaliphatic diamine having 4 to 20 carbon atoms.

When the total molar number of the diamine-derived component units contained in the polyamide resin (A) is determined as 100 mol%, the diamine-derived component unit (Ab) preferably includes the component unit (Ab1) derived from a linear alkylene diamine having 4 to 18 carbon atoms at an amount of 20 mol% or more and 100 mol% or less, and more preferably at an amount of 20 mol% or more and 80 mol% or less. When the content of the above component unit is 20 mol% or more, the crystallization rate does not become too slow, making it easier to appropriately increase the crystallinity and mechanical strength of the polyamide resin (A). When the content of the above component unit is 100 mol% or less, preferably 80 mol% or less, the crystallization rate of the polyamide resin (A) does not become too high, making it less likely to impair flowability during molding. From the same viewpoint, the content of the component unit derived from a linear aliphatic diamine is still more preferably 30 mol% or more and 60 mol% or less based on the total molar number.

In addition, the diamine-derived component unit (Ab) may include the component unit (Ab2) derived from an alkylene diamine having a side chain alkyl group and having 4 to 18 carbon atoms or the component unit (Ab3) derived from a cycloaliphatic diamine having 4 to 20 carbon atoms. In this case, when the total molar number of the diamine-derived component unit contained in the polyamide resin (A) is determined as 100 mol%, the amount of the component unit (Ab2) derived from an alkylene diamine having a side chain alkyl group and having 4 to 18 carbon atoms or the component unit (Ab3) derived from a cycloaliphatic diamine having 4 to 20 carbon atoms is preferably 20 mol% or more and 80 mol% or less. When the content of the above component unit is 20 mol% or more, the crystallization rate of the polyamide resin (A) tends to become appropriately slow, making it easier to increase flowability during molding. When the content of the above component unit is 80 mol% or less, the crystallinity and mechanical strength of the polyamide resin (A) are less likely to be impaired. From the same viewpoint, the content of the component unit derived from a branched aliphatic diamine is more preferably 40 mol% or more and 70 mol% or less based on the total molar number.

Examples of the component unit (Ab1) derived from a linear alkylene diamine having 4 to 18 carbon atoms include component units derived from 1,4-diaminobutane, 1,6-diaminohexane, 1,7-diaminoheptane, 1,8-diaminooctane, 1,9-diaminononane, 1,10-diaminodecane, 1,11-diaminoundecane, and 1,12-diaminododecane. Among these, component units derived from 1,6-diaminohexane, 1,8-diaminooctane, 1,10-diaminodecane, and 1,12-diaminododecane are preferred, and the component unit derived from 1,6-diaminohexane is more preferred. The polyamide resin (A) may contain a plurality of types of these component units.

Examples of the component unit (Ab2) derived from an alkylene diamine having a side chain alkyl group and having 4 to 18 carbon atoms include component units derived from 1-butyl-1,2-diamino-ethane, 1,1-dimethyl-1,4-diamino-butane, 1-ethyl-1,4-diaminobutane, 1,2-dimethyl-1,4-diamino-butane, 1,3-dimethyl-1,4-diamino-butane, 1,4-dimethyl-1,4-diamino-butane, 2,3-dimethyl-1,4-diamino-butane, 2-methyl-1,5-diaminopentane, 2,5-dimethyl-1,6-diamino-hexane, 2,4-dimethyl-1,6-diamino-hexane, 3,3-dimethyl-1,6-diamino-hexane, 2,2-dimethyl-1,6-diamino-hexane, 2,2,4-trimethyl-1,6-diamino-hexane, 2,4,4-trimethyl-1,6-diamino-hexane, 2,4-diethyl-1,6-diamino-hexane, 2,3-dimethyl-1,7-diamino-heptane, 2,4-dimethyl-1,7-diamino-heptane, 2,5-dimethyl-1,7-diamino-heptane, 2,2-dimethyl-1,7-diamino-heptane, 2-methyl-4-ethyl-1,7-diamino-heptane, 2-ethyl-4-methyl-1,7-diamino-heptane, 2,2,5,5-tetramethyl-1,7-diamino-heptane, 3-isopropyl-1,7-diamino-heptane, 3-isooctyl-1,7-diamino-heptane, 1,3-dimethyl-1,8-diamino-octane, 1,4-dimethyl-1,8-diamino-octane, 2,4-dimethyl-1,8-diamino-octane, 3,4-dimethyl-1,8-diaminooctane, 4,5-dimethyl-1,8-diamino-octane, 2,2-dimethyl-1,8-diamino-octane, 3,3-dimethyl-1,8-diamino-octane, 4,4-dimethyl-1,8-diamino-octane, 3,3,5-trimethyl-1,8-diamino-octane, 2,4-diethyl-1,8-diamino-octane, and 5-methyl-1,9-diamino-nonane. Among these, component units each derived from a side chain alkyl diamine that has 1 to 2 side chain alkyl groups each having 1 to 2 carbon atoms and a main chain having 4 to 10 carbon atoms are preferred, and the component unit derived from 2-methyl-1,5-diaminopentane is more preferred. The polyamide resin (A) may contain a plurality of types of these component units.

Examples of the component unit (Ab3) derived from a cycloaliphatic diamine having 4 to 20 carbon atoms include component units derived from 1,3-diaminocyclohexane, 1,4-diaminocyclohexane, 1,3-bis(aminomethyl)cyclohexane, 1,4-bis(aminomethyl)cyclohexane, 2,5-bisaminomethylnorbornane, 2,6-bisaminomethylnorbomane, isophorone diamine, piperazine, 2,5-dimethylpiperazine, bis(4-aminocyclohexyl)methane, 1,3-bis(aminocyclohexyl)methane, bis(4-aminocyclohexyl)propane, 4,4'-diamino-3,3'-dimethyldicyclohexylpropane, 4,4'-diamino-3,3'-dimethyldicyclohexylmethane, 4,4'-diamino-3,3'-dimethyl-5,5'-dimethyldicyclohexylmethane, 4,4'-diamino-3,3'-dimethyl-5,5'-dimethyldicyclohexylpropane, $\alpha,\alpha'$-bis(4-aminocyclohexyl)-p-diisopropylbenzene, $\alpha,\alpha'$-bis(4-aminocyclohexyl)-m-diisopropylbenzene, $\alpha,\alpha'$-bis(4-aminocyclohexyl)-1,4-cyclohexane, and $\alpha,\alpha'$-bis(4-aminocyclohexyl)-1,3-cyclohexane. Among these, component units derived from 1,3-diaminocyclohexane, 1,4-diaminocyclohexane, 1,3-bis(aminomethyl)cyclohexane, 1,4-bis(aminomethyl)cyclohexane, 2,5-bisaminomethylnorbornane, 2,6-bisaminomethylnorbomane, bis(4-aminocyclohexyl)methane, and 4,4'-diamino-3,3'-dimethyldicyclohexylmethane are preferred, and component units derived from 1,3-diaminocyclohexane, 1,4-diaminocyclohexane, 1,3-bis(aminomethyl)cyclohexane, 2,5-bisaminomethylnorbomane, 2,6-bisaminomethylnorbornane, and bis(4-aminocyclohexyl)methane are more preferred.

Herein, the number of carbon atoms in a component unit derived from an alkylene diamine having a side chain alkyl group is the sum of the number of carbon atoms in the main chain alkylene group and the number of carbon atoms in the side chain alkyl group(s), unless otherwise specified.

The polyamide resin (A) may further include a component unit derived from another diamine, such as a small amount of a component unit derived from metaxylylenediamine, in addition to the above-described component units (Ab1), (Ab2), and (Ab3). The content of such component units derived from another diamine may be 50 mol% or less, preferably 40 mol% or less, based on the total amount of the diamine-derived component unit (Ab).

In the polyamide resin (A), at least some of the terminal groups of the molecules of the polyamide resin may be blocked with a terminal blocking agent from the viewpoint of increasing thermal stability during compounding and molding, and further increasing mechanical strength. For example, when the terminals of the molecules are carboxy group, the terminal blocking agent is preferably a monoamine, and when the terminals of the molecules are amino group, the terminal blocking agent is preferably a monocarboxylic acid.

Examples of the monoamine include aliphatic monoamines such as methylamine, ethylamine, propylamine, and butylamine, alicyclic monoamines such as cyclohexylamine and dicyclohexylamine, and aromatic monoamines such as aniline and toluidine. Examples of the monocarboxylic acid include aliphatic monocarboxylic acids having 2 or more and 30 or less carbon atoms such as acetic acid, propionic acid, butyric acid, valeric acid, caproic acid, caprylic acid, lauric acid, tridecylic acid, myristic acid, palmitic acid, stearic acid, oleic acid, and linoleic acid, aromatic monocarboxylic acids such as benzoic acid, toluic acid, naphthalenecarboxylic acid, methylnaphthalenecarboxylic acid, and phenylacetic acid, and alicyclic monocarboxylic acids such as cyclohexanecarboxylic acid. The aromatic monocarboxylic acid and the alicyclic monocarboxylic acid may have a substituent in the cyclic structure thereof.

Moreover, the dicarboxylic acid-derived component unit (Aa) of the polyamide resin (A) may include a component unit derived from biomass-derived dicarboxylic acid, and the diamine-derived component unit (Ab) may include a component unit derived from biomass-derived diamine. In addition, the polyamide resin (A) may be a biomass-derived polyamide resin (A) obtained by polymerizing a group of raw materials including biomass-derived raw materials.

[Physical properties]

The melting point (Tm) of the polyamide resin (A), measured by a differential scanning calorimeter (DSC) (hereinafter also simply referred to as "melting point (Tm)"), is preferably 280°C or higher and 340°C or lower. When the melting point (Tm) of the polyamide resin (A) is 280°C or higher, the mechanical strength and heat resistance of the resin composition and molded article in the high-temperature range are less likely to be impaired, and when the melting point

(Tm) is 340°C or lower, there is no need to excessively increase the molding temperature, and thus moldability of the resin composition is more likely to be improved. From the above viewpoint, the melting point (Tm) of the polyamide resin is more preferably 290°C or higher and 340°C or lower, and even more preferably 300°C or higher and 340°C or lower.

The glass transition temperature (Tg) of the polyamide resin (A) is preferably 80°C or higher and 150°C or lower.

The heat of fusion (ΔH) of the polyamide resin (A) is preferably 20 J/g or more. When the polyamide resin (A) has a heat of fusion (ΔH) of 20 J/g or more, it is easy to increase the heat resistance of the resin member due to its crystallinity. The upper limit of the heat of fusion (ΔH) of the polyamide resin (A) is not particularly limited, but from the viewpoint of not impairing moldability, the upper limit may be 130 J/g. The heat of fusion (ΔH) of the polyamide resin (A) is preferably 30 J/g or more and 130 J/g or less, and more preferably 30 J/g or more and 100 J/g or less.

The heat of fusion (ΔH), melting point (Tm), and glass transition temperature (Tg) of the polyamide resin (A) can be measured using a differential scanning calorimeter (DSC220C model, manufactured by Seiko Instruments Inc.).

Specifically, approximately 5 mg of the polyamide resin (A) is hermetically sealed in an aluminum pan for measurement and heated from room temperature to 350°C at a rate of 10°C/min. For completely melting the resin, the resin was held at 350°C for 3 minutes and then cooled to 30°C at the rate of 10°C/min. After allowed to stand at 30°C for 5 minutes, the resin was heated a second time to 350°C at the rate of 10°C/min. The temperature (°C) of the endothermic peak during the second heating is used as the melting point (Tm) of the polyamide resin (A), and the displacement point corresponding to the glass transition is used as the glass transition temperature (Tg). The heat of fusion (ΔH) is determined from the area of the endothermic peak during the second heating according to JIS K7122.

The melting point (Tm), glass transition temperature (Tg), and heat of fusion (ΔH) of the polyamide resin (A) can be adjusted by the compositions of the dicarboxylic acid-derived component unit (Aa) and the diamine-derived component unit (Ab). For example, increasing the content of component unit (Aa1) derived from terephthalic acid or decreasing the content of the component unit (Aa2) derived from an aromatic dicarboxylic acid other than terephthalic acid, such as isophthalic acid, tends to increase the melting point (Tm), glass transition temperature (Tg), and heat of fusion (ΔH) of the polyamide resin (A).

The intrinsic viscosity [η] of the polyamide resin (A), measured at 25°C in 96.5% sulfuric acid, is preferably 0.6 dl/g or more and 1.5 dl/g or less. When the intrinsic viscosity [η] of the polyamide resin (A) is 0.6 dl/g or more, it is easy to sufficiently increase the mechanical strength (toughness and the like) of the molded article, and when the intrinsic viscosity [η] is 1.5 dl/g or less, the flowability during molding of the polyamide resin composition is less likely to be impaired. From the same viewpoint, the intrinsic viscosity [η] of the polyamide resin (A) is more preferably 0.8 dl/g or more and 1.2 dl/g or less. The intrinsic viscosity [η] can be adjusted by the amount of terminal blocking and the like of the polyamide resin (A).

The intrinsic viscosity of the polyamide resin can be measured according to JIS K6810-1977.

Specifically, 0.5 g of a polyamide resin is dissolved in 50 ml of 96.5% sulfuric acid solution to prepare a sample solution. The intrinsic viscosity can be obtained by measuring the falling time (seconds) of the sample solution with an Ubbelohde viscometer at 25 ± 0.05°C, and applying the obtained value to the following equation for calculation.

$$[\eta] = \eta SP/[C(1 + 0.205\eta SP)]$$

In the above equation, symbols and variables are defined as follows.

[η]: intrinsic viscosity (dl/g)
ηSP: specific viscosity
C: sample concentration (g/dl)

The ηSP is obtained by the following equation.

$$\eta SP = (t - t0)/t0$$

t: falling time (sec) of sample solution
t0: falling time (sec) of blank sulfuric acid

The amount of terminal amino groups in the polyamide resin (A) is preferably 10 mmol/kg or more and 150 mmol/kg or less, more preferably 15 mmol/kg or more and 130 mmol/kg or less, and even more preferably 20 mmol/kg or more and 100 mmol/kg or less. When the amount of terminal amino groups in the polyamide resin (A) is 10 mmol/kg or more, the polyamide resin (A) is more likely to chemically interact with the glass fibers (C) treated with a surface treatment agent or a sizing agent, and the glass fibers (C) are more likely to be dispersed. Moreover, under the presence of the glass fibers (C) treated with a surface treatment agent or a sizing agent, the decrease in bending strength when a large amount of the phosphorus compound (B) is added is more likely to occur, so the effect of limiting the decrease in bending strength by

keeping the addition amount of the phosphorus compound (B) below a certain level becomes more prominent. When the amount of terminal amino groups in the polyamide resin (A) is 150 mmol/kg or less, the chemical interaction between the polyamide resin (A) and the glass fibers (C) is less likely to become excessive, allowing satisfactory flowability of the polyamide resin composition.

The amount of terminal carboxylic acid groups in the polyamide resin (A) is preferably 60 mmol/kg or more and 220 mmol/kg or less, more preferably 80 mmol/kg or more and 200 mmol/kg or less, and even more preferably 100 mmol/kg or more and 180 mmol/kg or less.

The amount of terminal amino groups and terminal carboxylic acid groups can be measured by NMR. For example, the polyamide resin (A) is dissolved in deuterated hexafluoroisopropanol (HFIP) to prepare a sample for NMR measurement, and NMR measurement is performed to obtain an NMR spectrum. The amount of terminal carboxylic acid structures (μeq/g) can be obtained as a value per part by mass of the polyamide resin (A) from the ratio of the peak area of the methylene group hydrogen adjacent to the terminal carboxylic acid structure to the peak area of the methylene group hydrogen adjacent to the amide structure in the obtained spectrum. In addition, the amount of terminal amine structures (μeq/g) can be obtained as a value per part by mass of the polyamide resin (A) from the peak area derived from the terminal amine structure and the peak area of the methylene group hydrogen of the carboxylic acid component constituting the amide structure. The obtained values can be converted to mmol/kg.

[Production method]

The polyamide resin (A) can be produced by polycondensation of the above-described dicarboxylic acid and diamine in a homogeneous solution. Specifically, the polyamide resin can be produceed by heating a dicarboxylic acid and a diamine in the presence of a catalyst as described in WO 03/085029 to obtain a low-order condensate, and then imparting a shear stress to a melt of the low-order condensate and subjecting the melt to polycondensation.

From the viewpoint of adjusting the intrinsic viscosity of the polyamide resin (A), the above-described terminal blocking agent may be added to the reaction system. The intrinsic viscosity [η] (or molecular weight) of the polyamide resin can be adjusted by adjusting the amount of the terminal blocking agent to be added.

The terminal blocking agent is added to a reaction system of a dicarboxylic acid and a diamine. The addition amount of the terminal blocking agent is preferably 0.07 mol or less, and more preferably 0.05 mol or less, based on 1 mol of the total amount of the dicarboxylic acid.

The content of the polyamide resin (A) in the polyamide resin composition is preferably 25 mass% or more and 80 mass% or less with respect to the polyamide resin composition, more preferably 35 mass% or more and 70 mass% or less, and even more preferably 45 mass% or more and 65 mass% or less. The higher the content of the polyamide resin (A), the more the mechanical strength of the resulting molded article can be increased. On the other hand, from the viewpoint of further improving properties by adding other components, the upper limit of the content of the polyamide resin (A) may be within the above range.

1-2. Phosphorus compound (B)

The phosphorus compound (B) may be added to increase the tracking resistance of the polyamide resin composition. The phosphorus compound (B) is not particularly limited as long as it is a compound containing a phosphorus element in the molecule thereof, and may be a phosphorus compound used as a flame retardant. It is preferable that the phosphorus compound (B) is added by mixing the phosphorus compound (B) with the polyamide resin (A), the glass fibers (C), and other components as necessary after synthesizing the polyamide resin (A) through the above-described polycondensation reaction, and the like. The phosphorus compound (B) preferably includes a compound having a -P(=O)- structure, and more preferably includes a compound having a -P(=O)-O- structure. Furthermore, the phosphorus compound (B) preferably includes a phosphinate compound, and more preferably includes a metal phosphinate compound. The mechanism by which the tracking resistance is improved by the phosphorus compound (B) is not clear, but is presumed to be as follows.

It is believed that tracking failure occurs when electrical discharge occurs near the surface of a molded article of the polyamide resin composition, and the polyamide resin (A) is heated and carbonized by the heat generated by the electrical discharge, thereby reducing the electrical resistance of the surface of the molded article. On the other hand, when the polyamide resin composition contains the phosphorus compound (B), a reaction in which the polyamide resin (A) is hydrolyzed by the phosphorus compound (B) may occur when electrical discharge occurs. Here, the above hydrolysis reaction is an endothermic reaction, and therefore, the heating of the polyamide resin (A) by the heat generated by the electrical discharge is limited. As a result, tracking failure is considered to be reduced. In addition, when the phosphorus compound (B) includes a compound having a -P(=O)-O- structure, the phosphorus compound (B) is hydrolyzed to become a compound having a highly acidic - P(=O)-OH structure, thereby further promoting the hydrolysis of the polyamide resin (A). Therefore, the heating of the polyamide resin (A) by the heat generated by the electrical discharge is more limited, and

tracking failure can be more limited.

To further increase tracking resistance, it is effective to increase the content of the phosphorus compound (B). However, as described above, in a polyamide resin composition including glass fibers (C) including a surface treatment agent or a sizing agent, it has been newly found that when the content of the phosphorus compound (B) is too high, the mechanical strength (especially bending strength) of the polyamide resin composition decreases.

In general, when a polyamide resin composition is reinforced with glass fibers, the glass fibers are often treated with a surface treatment agent or a sizing agent in order to improve the dispersibility of the glass fibers in the polyamide resin composition and to improve the adhesion between the glass fibers and the polyamide resin at the interface between the glass fibers and the polyamide resin. In the present embodiment as well, since the glass fibers (C) include a surface treatment agent or a sizing agent, during the kneading of the polyamide resin composition, the surface treatment agent or sizing agent in the glass fibers (C) or the functional groups formed on the surface of the glass fiber (C) by the agent interact or react with the terminal amino groups or terminal carboxylic acid groups of the polyamide resin (A). Therefore, the dispersibility of the glass fibers (C) in the polyamide resin (A) is improved, and the adhesion between the glass fiber (C) and the polyamide resin (A) is increased. As a result, a satisfactory reinforcing effect by the glass fibers (C) is obtained, and the mechanical strength, such as bending strength, of the molded article obtained by molding the polyamide resin composition is improved.

When the content of the phosphorus compound (B) is increased, the interaction or reaction sites between the surface treatment agent or sizing agent in the glass fibers (C) or the functional groups formed on the surface of the glass fiber (C) by the agent and the terminal amino groups or terminal carboxylic acid groups of the polyamide resin (A) become more susceptible to being broken by the attack of the phosphorus compound (B). This becomes noticeable when the phosphorus compound (B) includes a compound having the - P(=O)- structure or a compound having the -P(=O)-O- structure. As a result, the dispersibility of the glass fibers (C) in the polyamide resin (A) decreases. Alternatively, the adhesion between the glass fiber (C) and the polyamide resin (A) decreases. As a result, it is considered that the bending strength of a molded article obtained by molding the polyamide resin composition decreases.

In particular, when a high melting point polyamide is used as the polyamide resin (A), the resin composition is subjected to a high temperature during melt kneading or molding for producing the polyamide resin composition. When the polyamide resin composition has a high temperature, the attack by the phosphorus compound (B) is more likely to occur, making the decrease in bending strength more noticeable.

From the foregoing, in the present embodiment, the content of the phosphorus compound (B) in the entire polyamide resin composition is appropriately reduced. Specifically, the content of phosphorus element (including phosphorus element derived from the phosphorus compound (B)) in the polyamide resin composition is adjusted to 500 mass ppm or more and 10,000 mass ppm or less based on the total amount of the polyamide resin composition. When the content of the phosphorus element is 10,000 mass ppm or less, the tracking resistance can be sufficiently increased while the mechanical strength of the molded article is satisfactorily maintained. When the content of the phosphorus element is 500 mass ppm or more, the tracking resistance can be sufficiently increased. From the same viewpoint, the content of the phosphorus element in the polyamide resin composition is preferably 1,000 mass ppm or more and 9,000 mass ppm or less based on the total amount of the polyamide resin composition, more preferably 2,000 mass ppm or more and 8,000 mass ppm or less, even more preferably 2,200 mass ppm or more and 6,200 mass ppm or less, and particularly preferably 4,000 mass ppm or more and 6,200 mass ppm or less.

The content of the phosphorus element in the polyamide resin composition can be measured, for example, by high-frequency inductively coupled plasma (ICP) emission spectrometry at a wavelength of 213.618 (nm) using an IRIS/IP device manufactured by Thermo Jarrell Ash.

In the polyamide resin composition or a molded article obtained by molding the polyamide resin composition, it is preferable that the phosphorus compound (B) and the polyamide resin (A) are thermally connected. In addition, in the polyamide resin composition or a molded article obtained by molding the polyamide resin composition, it is preferable that the phosphorus compound (B) is in direct contact with the polyamide resin (A). This is because when the phosphorus compound (B) and the polyamide resin (A) are thermally connected or in direct contact, the reaction in which the polyamide resin (A) is hydrolyzed by the phosphorus compound (B) can occur more efficiently when electrical discharge occurs.

As described above, the phosphorus compound (B) preferably includes a phosphinate compound. The phosphinate compound is preferably at least one member selected from the group consisting of compounds represented by Formula (I), compounds represented by Formula (II), and condensates thereof.

[Chemical Formula 2]

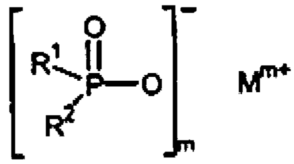

... Formula (I)

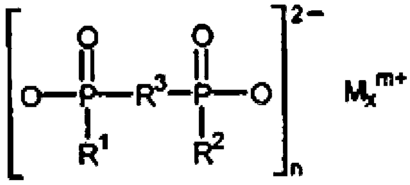

... Formula (II)

In Formulas (I) and (II), $R^1$ and $R^2$ are each a C1-C6 alkyl group or an aryl group,

$R^3$ is a C1-C10 alkylene group, a C6-C10 arylene group, a C6-C10 alkylarylene group, or a C6-C10 arylalkylene group,
M is one member selected from the group consisting of Mg, Ca, Al, Sb, Sn, Ge, Ti, Zn, Fe, Zr, Ce, Bi, Sr, Mn, Li, Na, K, and protonated nitrogen bases, and
m is an integer from 1 to 4, n is an integer from 1 to 4, and x is an integer from 1 to 4.

Specific examples of the phosphinate compound include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methane di(methylphosphinate), calcium di(methylphosphinate), magnesium methane di(methylphosphinate), aluminum methane di(methylphosphinate), zinc methane di(methylphosphinate), calcium benzene-1,4-(dimethylphosphinate), magnesium benzene-1,4-(dimethylphosphinate), aluminum benzene-1,4-(dimethylphosphinate), zinc benzene-1,4-(dimethylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate. The following phosphinate compounds are preferred: calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and zinc diethylphosphinate. Aluminum diethylphosphinate is more preferred. One of the factors causing tracking failure is the carbonization of a polyamide resin composition, and therefore a high concentration of aromatic rings in the polyamide resin composition tends to lead to tracking failure. However, since the phosphorus compound (B) does not contain an aromatic ring, the phosphorus compound (B) does not increase the aromatic rings in the polyamide resin composition. Furthermore, when the phosphorus compound (B) has a hydroxyl group, the phosphorus compound (B) is more likely to attack the interaction or reaction sites between the surface treatment agent or sizing agent in the glass fibers (C) or the functional groups formed on the surface of the glass fiber (C) by the agent and the terminal amino groups or terminal carboxylic acid groups of the polyamide resin (A). Therefore, it is preferable that the phosphorus compound (B) does not have a hydroxyl group. From the above viewpoint, it is particularly preferable that the phosphorus compound (B) includes aluminum diethylphosphinate.

Representative examples of the phosphorus compound (B) include EXOLIT OP1230 and OP930 manufactured by Clariant Japan.

The average particle diameter (D50) of the phosphorus compound (B) is not particularly limited, but is preferably 5 μm or more and 100 μm or less, more preferably 10 μm or more and 80 μm or less, even more preferably 20 μm or more and 60 μm or less, and particularly preferably 25 μm or more and 45 μm or less. When the average particle diameter of the phosphorus compound (B) is 5 μm or more, the specific surface area of the phosphorus compound (B) can be appropriately reduced, thereby suppressing excessive attack by the phosphorus compound (B) on the interaction or reaction sites between the polyamide resin (A) and the glass fibers (C) during melt kneading or molding in the production of

the polyamide resin composition, resulting in easier limitation of the decrease in bending strength. When the average particle diameter of the phosphorus compound (B) is 100 μm or less, the specific surface area of the phosphorus compound (B) can be appropriately increased, making it easier to achieve the effect of limiting tracking failure without excessively increasing the amount of the phosphorus compound (B) added. The average particle diameter of the phosphorus compound (B) can be measured by the dynamic light scattering method.

The content of the phosphorus compound (B) in the polyamide resin composition depends on the composition of the polyamide resin composition, but may be of any value as long as the phosphorus element content is within the above range. For example, the content is preferably 0.5 mass% or more and less than 5 mass% based on the total amount of the polyamide resin composition, more preferably 0.75 mass% or more and 4.5 mass% or less, even more preferably 1 mass% or more and 4 mass% or less, and particularly preferably 2 mass% or more and 4 mass% or less. A higher content of the phosphorus compound (B) can further increase the tracking resistance of the polyamide resin composition. A lower content of the phosphorus compound (B) can further limit the decrease in mechanical strength of the molded article.

In addition, from the same viewpoint as described above, the content of the phosphorus compound (B) in the polyamide resin composition is preferably 0.5 mass% or more and 10 mass% or less with respect to the polyamide resin (A), more preferably 0.5 mass% or more and 8 mass% or less, even more preferably 1 mass% or more and 7 mass% or less, and particularly preferably 2 mass% or more and 6 mass% or less.

1-3. Glass fiber (C)

The type of glass fiber (C) is not particularly limited as long as it is used for reinforcing the resin, and it may be chopped strands or milled fibers with shorter fiber lengths. In addition, the cross-sectional shape of the glass fiber may be circular or non-circular such as an ellipse or an oval.

The average fiber length of the glass fibers (C) may be, for example, 1 μm or more and 20 mm or less, preferably 5 μm or more and 10 mm or less, from the viewpoint of increasing the moldability of the polyamide resin composition and improving the mechanical strength and heat resistance of the resulting molded article. In addition, the aspect ratio of the glass fiber may be, for example, 5 or more and 2,000 or less, preferably 30 or more and 600 or less.

The average fiber length and average fiber diameter of the glass fibers (C) can be measured by the following method.

1) After a polyamide resin composition is dissolved in a hexafluoroisopropanol/chloroform solution (0.1/0.9 vol%), the resulting liquid is filtered and the obtained residue is collected.
2) The residue obtained in the above-described step 1) is dispersed in water, and the fiber length (Li) and the fiber diameter (Di) of each of randomly selected 300 fibers are measured with an optical microscope (magnification: 50×). Then, qi is defined as the number of fibers whose fiber length is Li, and the weight average length (Lw) is calculated based on the following equation and used as the average fiber length of the glass fibers.

$$\text{Weight average length (Lw)} = (\Sigma qi \times Li^2) / (\Sigma qi \times Li)$$

In the same manner, ri is defined as the number of fibers whose fiber diameter is Di, and the weight average diameter (Dw) is calculated based on the following equation and used as the average fiber diameter of the glass fibers.

$$\text{Weight average diameter (Dw)} = (\Sigma ri \times Di^2) / (\Sigma ri \times Di)$$

The glass fiber (C) includes a surface treatment agent or a sizing agent.

The surface treatment agent or the sizing agent may be any known surface treatment agent or sizing agent used for glass fibers incorporated into the polyamide resin composition. Examples of the surface treatment agent or the sizing agent include coupling agents such as silane-based coupling agents, titanium-based coupling agents, and aluminate-based coupling agents, epoxy-based compounds, urethane-based compounds, carboxylic acid-based compounds, urethane/maleic acid-modified compounds, and urethane/amine-modified compounds.

The surface treatment agent or the sizing agent preferably has an acidic group. That is, the surface treatment agent or the sizing agent preferably includes a compound having an acidic group. When the surface treatment agent or the sizing agent has an acidic group, interaction or reaction with the terminal amino group of the polyamide resin (A) is more likely to occur. Therefore, the dispersibility of the glass fibers (C) in the polyamide resin (A) is further improved, and the adhesion between the glass fibers (C) and the polyamide resin (A) is further increased. As a result, the reinforcing effect of the glass fibers (C) is more favorably obtained, and the mechanical strength, such as bending strength, of the molded

article obtained by molding the polyamide resin composition is further improved. Furthermore, when the surface treatment agent or the sizing agent has an acidic group, the interaction between the acidic group and the terminal amino group of the polyamide resin (A) is particularly likely to be inhibited by the phosphorus compound (B). Therefore, the effect of appropriately reducing the content of the phosphorus compound (B) in the polyamide resin composition becomes more pronounced.

Examples of the acidic group include carboxy group, acid anhydride group, carboxylic acid ester group, and sulfonic acid group. Among these, carboxy group, acid anhydride group, and carboxylic acid ester group are preferred, and carboxy group and acid anhydride group are more preferred. The carboxylic acid ester group may be a functional group derived from a carboxylic acid ester.

Examples of the surface treatment agent having an acidic group include silane coupling agents having an acid anhydride group, such as 3-trimethoxysilylpropylsuccinic anhydride.

Examples of the sizing agent having an acidic group include sizing agents containing a homopolymer of an unsaturated carboxylic acid or an anhydride thereof, or a copolymer of an unsaturated carboxylic acid or an anhydride thereof and an unsaturated monomer.

Examples of the unsaturated carboxylic acid include acrylic acid, methacrylic acid, cinnamic acid, itaconic acid, fumaric acid, mesaconic acid, citraconic acid, and maleic acid. Examples of the anhydride of the unsaturated carboxylic acid include maleic anhydride, itaconic anhydride, and dodecenylsuccinic anhydride. Among these, acrylic acid, methacrylic acid, maleic acid, and maleic anhydride are preferred.

Examples of the unsaturated monomer include styrene, butadiene, acrylonitrile, vinyl acetate, methyl acrylate, ethyl acrylate, methyl methacrylate, ethyl methacrylate, methyl styrene, ethylene, propylene, butylene, isobutylene, and vinyl ether. Among these, methyl acrylate and methyl methacrylate are preferred, and it is more preferable that both methyl acrylate and methyl methacrylate are contained.

When the sizing agent contains a copolymer of an unsaturated carboxylic acid or an anhydride thereof and an unsaturated monomer, the proportion of the unsaturated carboxylic acid or the anhydride thereof in the copolymer is preferably 20 mass% or more and 60 mass% or less. When the proportion is 20 mass% or more, the effect of improving the mechanical strength of the polyamide resin composition by increasing the chemical interaction with the polyamide resin (A) due to the acidic group (carboxy group) is prominent. When the proportion is 60 mass% or less, the chemical interaction with the polyamide resin (A) due to the acidic group is less likely to be excessive, and thus the flowability of the polyamide resin composition during molding is less likely to be impaired.

The weight average molecular weight (Mw) of the homopolymer or copolymer is preferably 3,000 or more and 60,000 or less. When the weight average molecular weight of the homopolymer or copolymer is 3,000 or more, the effect of improving the mechanical strength of the polyamide resin composition by increasing the molecular weight (chain length) of the homopolymer or copolymer to facilitate entanglement with the molecular chains of the polyamide resin (A) (increasing physical interaction) is further increased. On the other hand, when the weight average molecular weight of the homopolymer or copolymer to 60,000 or less, the dispersibility of the glass fibers (C) in the polyamide resin (A) can be further improved. From the above viewpoint, the weight average molecular weight of the homopolymer or copolymer is preferably 10,000 or more and 50,000 or less, more preferably 20,000 or more and 50,000 or less. The weight average molecular weight of the homopolymer or copolymer is a value measured by gel permeation chromatography (GPC) and calculated using polystyrene as a standard substance.

The homopolymer or copolymer may be used in combination with another resin such as a urethane resin or an epoxy resin. In particular, it is preferable to combine the homopolymer or copolymer with a urethane resin. That is, the sizing agent preferably includes the homopolymer or copolymer and a urethane resin.

Specifically, the urethane bond site (-NHCO-) of the urethane resin has an appropriately satisfactory affinity with the terminal carboxy group of the polyamide resin (A), making it easy to interact the glass fibers (C) with the polyamide resin (A). Therefore, even when the phosphorus compound (B) is contained, it is easier to increase the affinity between the glass fiber (C) and the polyamide resin (A), and it is easier to disperse the glass fibers (C) in the polyamide resin (A).

Examples of the urethane resin include urethane resins synthesized from an isocyanate such as m-xylylene diisocyanate (XDI), 4,4'-methylenebis(cyclohexyl isocyanate) (HMDI), or isophorone diisocyanate (IPDI), and a polyester-based or polyether-based diol.

(Production method)

The glass fibers containing the surface treatment agent or sizing agent can be obtained, for example, by applying (attaching) the surface treatment agent or sizing agent to fiber strands by a known method such as a roller-type applicator during a step of producing the glass fibers, and then performing the drying to proceed a reaction.

The amount of the surface treatment agent or sizing agent attached is preferably 0.2 parts by mass or more and 3 parts by mass or less in terms of solid content relative to 100 parts by mass of the glass fibers (C), more preferably 0.2 parts by mass or more and 2 parts by mass or less, and even more preferably 0.3 parts by mass or more and 2 parts by mass or

less. When the attached amount is 0.2 parts by mass or more, the bundling property of the glass fibers (C) is further improved. In addition, when the attached amount is 2 parts by mass or less, the thermal stability of the polyamide resin composition further improves.

The content of the glass fibers (C) in the polyamide resin composition is preferably 15 mass% or more and 70 mass% or less based on the total amount of the polyamide resin composition, more preferably 25 mass% or more and 60 mass% or less, and even more preferably 30 mass% or more and 50 mass% or less. A higher content of the glass fibers (C) can further increase the mechanical strength of the polyamide resin composition. A lower content of the glass fibers (C) can further limit the decrease in mechanical strength of the molded article caused by the addition of the phosphorus compound (B).

1-4. Other components

The polyamide resin composition may include another known component. The content of another component is preferably 0 mass% or more and 10 mass% or less based on the total amount of the polyamide resin composition, more preferably 0.5 mass% or more and 10 mass% or less.

Examples of other components include colorants, crystal nucleating agents, lubricants, corrosion resistance improving agents, drip inhibitors, ion scavengers, elastomers (rubber), antistatic agents, release agents, antioxidants (phenols, amines, sulfur, phosphorus, and the like), heat stabilizers (lactone compounds, vitamin E, hydroquinones, copper halides, and iodine compounds), light stabilizers (benzotriazoles, triazines, benzophenones, benzoates, hindered amines, and oxanilides, and other polymers (polyolefins, olefin copolymers such as ethylene-propylene copolymer, ethylene-1-butene copolymer, and propylene-1-butene copolymer, polystyrene, polyamides, polycarbonates, polyacetals, polysulfones, polyphenylene oxides, fluororesins, silicone resins, and LCPs).

A colorant imparts a desired color tone to a molded article. The colorant is not particularly limited, but may be a pigment. Examples of the pigment include inorganic pigments such as carbon black, alumina, titanium oxide, chromium oxide, iron oxide, zinc oxide, and barium sulfate; and organic pigments such as azo pigments, phthalocyanine pigments, quinacridone pigments, perylene pigments, anthraquinone pigments, thioindigo pigments, and indanthrene pigments.

The content of the colorant is preferably 0.01 mass% or more and 5 mass% or less based on the total amount of the polyamide resin composition, more preferably 0.1 mass% or more and 2 mass% or less.

A crystal nucleating agent may increase the crystallinity of a molded article. Examples of the crystal nucleating agent include metal salt-based compounds such as sodium 2,2-methylenebis(4,6-di-t-butylphenyl)phosphate, aluminum tris(p-t-butylbenzoate), and stearates, sorbitol-based compounds such as bis(p-methylbenzylidene)sorbitol and bis(4-ethylbenzylidene)sorbitol, and inorganic substances such as talc, calcium carbonate, and hydrotalcite. Among these, talc is preferred from the viewpoint of further increasing the crystallinity of a molded article. One of these crystal nucleating agents may be used alone or two or more thereof may be used in combination.

The content of the crystal nucleating agent is preferably 0.1 mass% or more and 5 mass% or less based on the total amount of the polyamide resin composition, more preferably 0.1 mass% or more and 3 mass% or less. When the content of the crystal nucleating agent is within the above range, the crystallinity of the molded article can be more easily increased, and higher mechanical strength can be more easily obtained.

A lubricant increases the injection flowability during injection molding of the polyamide resin composition and makes the appearance of an obtained molded article favorable. The lubricant may be a fatty acid metal salt such as an oxycarboxylic acid metal salt or a higher fatty acid metal salt.

The oxycarboxylic acid in the oxycarboxylic acid metal salt may be an aliphatic oxycarboxylic acid or an aromatic oxycarboxylic acid. Examples of the aliphatic oxycarboxylic acid include aliphatic oxycarboxylic acids having 10 or more and 30 or less carbon atoms, such as $\alpha$-hydroxymyristic acid, $\alpha$-hydroxypalmitic acid, $\alpha$-hydroxystearic acid, $\alpha$-hydroxyeicosanoic acid, $\alpha$-hydroxydocosanoic acid, $\alpha$-hydroxytetraeicosanoic acid, $\alpha$-hydroxyhexaeicosanoic acid, $\alpha$-hydroxyoctaeicosanoic acid, $\alpha$-hydroxytriacontanoic acid, $\beta$-hydroxymyristic acid, 10-hydroxydecanoic acid, 15-hydroxypentadecanoic acid, 16-hydroxyhexadecanoic acid, 12-hydroxystearic acid, and ricinoleic acid. Examples of the aromatic oxycarboxylic acid include salicylic acid, m-oxybenzoic acid, p-oxybenzoic acid, gallic acid, mandelic acid, and tropic acid.

Examples of the metal in the oxycarboxylic acid metal salt include alkali metals such as lithium, and alkaline earth metals such as magnesium, calcium, and barium.

Among these, the oxycarboxylic acid metal salt is preferably a metal salt of 12-hydroxystearic acid, and more preferably magnesium 12-hydroxystearate and calcium 12-hydroxystearate.

Examples of the higher fatty acid in the higher fatty acid metal salt include higher fatty acids having 15 or more and 30 or less carbon atoms, such as stearic acid, oleic acid, behenic acid, and montanic acid.

Examples of the metal in the higher fatty acid metal salt include calcium, magnesium, barium, lithium, aluminum, zinc, sodium, and potassium.

Among these, the higher fatty acid metal salt is preferably calcium stearate, magnesium stearate, barium stearate, calcium behenate, sodium montanate, or calcium montanate.

The content of the lubricant is preferably 0.01 mass% or more and 1.3 mass% or less based on the total amount of the polyamide resin composition. When the content of the lubricant is 0.01 mass% or more, the flowability during molding is more likely to increase, and the appearance of the obtained molded article is more likely to improve. When the content of the lubricant is 1.3 mass% or less, gas is less likely to be generated by the decomposition of the lubricant during molding, and the appearance of the product is more likely to improve.

1-5. Production method

The polyamide resin composition can be produced by a method in which the polyamide resin (A), the phosphorus compound (B), the glass fibers (C), and another component as necessary are mixed by a known resin kneading means such as a Henschel mixer, V-blender, ribbon blender, or tumbler blender, or a method in which the components are mixed, and then the mixture is melt-kneaded with a single-screw extruder, multi-screw extruder, kneader, or Banbury mixer, followed by granulation or pulverization.

2. Applications of polyamide resin composition

The polyamide resin composition of the present invention can be molded by known molding methods such as compression molding, injection molding, and extrusion molding, and used as various molded articles.

The molded articles of the polyamide resin composition can be used for various applications. In particular, the polyamide resin composition has satisfactory mechanical strength and tracking resistance, and can therefore be preferably used in applications requiring these properties or in the field of precision molding. Examples of such applications include various molded products for electrical and electronic component applications such as automotive electrical components, connectors, switches, jacks, plugs, breakers, electromagnetic switches, circuit breakers, and LED reflective materials, and automotive component applications.

Examples

Hereinafter, the present invention is described with reference to Examples. The Examples should not be construed as limiting the scope of the present invention.

In the following experiments, for a polyamide resin, the melting point (Tm), the glass transition temperature (Tg), the intrinsic viscosity, the heat of fusion, and the amount of terminal amino groups were measured by the following methods.

(Melting point (Tm), glass transition temperature (Tg), and heat of fusion ($\Delta$H))

For a polyamide resin, the heat of fusion ($\Delta$H), melting point (Tm), and glass transition temperature (Tg) were measured with a differential scanning calorimeter (DSC220C, manufactured by Seiko Instruments Inc.).

Specifically, approximately 5 mg of a polyamide resin was hermetically sealed in an aluminum pan for measurement and heated from room temperature to 350°C at 10°C/min. For completely melting the resin, the resin was held at 350°C for 3 minutes and then cooled to 30°C at the rate of 10°C/min. After the resin was allowed to stand at 30°C for 5 minutes, the second heating was performed at 10°C/min to 350°C. The endothermic peak temperature (°C) in this second heating was used as the melting point (Tm) of the polyamide resin, and the displacement point corresponding to the glass transition was used as the glass transition temperature (Tg). The heat of fusion ($\Delta$H) was determined from the area of the endothermic peak during the second heating according to JIS K7122.

(Intrinsic viscosity [$\eta$])

The intrinsic viscosity [$\eta$] of the polyamide resin was determined by dissolving 0.5 g of the polyamide resin in 50 ml of a 96.5% sulfuric acid solution, measuring the falling time of the resulting solution at 25°C $\pm$ 0.05°C using an Ubbelohde viscometer, and calculating the intrinsic viscosity based on the equation: "[n] = $\eta$SP/(C(1 + 0.205$\eta$SP))".

[$\eta$]: intrinsic viscosity (dl/g)
$\eta$SP: specific viscosity
C: sample concentration (g/dl)
t: falling time (sec) of sample solution
t0: falling time (sec) of blank sulfuric acid

$$\eta SP = (t - t0)/t0$$

(Amount of terminal amino groups and amount of terminal carboxylic acid groups)

The amounts of terminal amino groups and terminal carboxylic acid groups of the polyamide resin were measured by NMR method.

A sample for NMR measurement was prepared by dissolving 30 mg of a polyamide resin in 0.5 mL of deuterated hexafluoroisopropanol (HFIP).

NMR measurement was performed on the sample using an ECA-500 nuclear magnetic resonance apparatus (500MHz-NMR), manufactured by JEOL Ltd. In the obtained spectrum, the amount of terminal carboxylic acid structures (μeq/g) was obtained as a value per part by mass of the polyamide resin from the ratio of the peak area of the methylene group hydrogen adjacent to the terminal carboxylic acid structure to the peak area of the methylene group hydrogen adjacent to the amide structure. The quantification of the terminal amine was performed such that the amount of terminal amine structures (μeq/g) was obtained as a value per part by mass of the polyamide resin from the peak area derived from the terminal amine structure and the peak area of the methylene group hydrogen of the carboxylic acid component constituting the amide structure. Then, the obtained values were converted to mmol/kg.

1. Preparation of Materials

1-1. Polyamide resin (A)

Synthesis of polyamide resin (A1)

Into an autoclave with a capacity of 13.6 L, 2,800 g (24.1 mol) of 1,6-hexanediamine, 2,774 g (16.7 mol) of terephthalic acid, 1,196 g (7.2 mol) of isophthalic acid, 36.6 g (0.30 mol) of benzoic acid, 5.7 g of sodium hypophosphite monohydrate, and 545 g of distilled water were charged and the autoclave was purged with nitrogen. Stirring was started at 190°C, and the internal temperature was increased to 250°C over 3 hours. At this time, the internal pressure of the autoclave was increased to 3.03 MPa. After the reaction was continued for 1 hour, the autoclave was vented to the atmosphere through a spray nozzle installed at the bottom thereof, and a low-order condensate was extracted. The low-order condensate was then cooled to room temperature, ground to a particle size of 1.5 mm or less, and dried at 110°C for 24 hours. The obtained low-order condensate had a water content of 4,100 ppm, and an intrinsic viscosity [η] of 0.15 dl/g. Next, this low-order condensate was placed in a solid phase polymerization apparatus with shelves, and after purging with nitrogen, the temperature was increased to 180°C over about 1 hour and 30 minutes. Thereafter, the reaction was carried out for 1 hour and 30 minutes, and the temperature was lowered to room temperature. The intrinsic viscosity [η] of the obtained prepolymer was 0.20 dl/g. Subsequently, the obtained prepolymer was subjected to melt polymerization in a twin-screw extruder with a screw diameter of 30 mm and an L/D of 36, at a barrel set temperature of 330°C, a screw rotation speed of 200 rpm, and a resin supply rate of 6 kg/h, to obtain a polyamide resin (A1).

The obtained polyamide resin (A1) had an intrinsic viscosity [η] of 1.00 dl/g, a melting point (Tm) of 330°C, a glass transition temperature (Tg) of 125°C, and a heat of fusion (ΔH) of 50 J/g. In addition, the amount of terminal amino groups in the polyamide resin (A1) was 20 mmol/kg, and the amount of terminal carboxy groups in the polyamide resin (A1) was 140 mmol/kg.

1-2. Phosphorus compound (B)

Phosphinate compound (EXOLIT OP1230 manufactured by Clariant Japan, phosphorus content: 23.8 mass%, aluminum diethylphosphinate, average particle diameter (D50): 10 to 50 μm)

1-3. Glass fiber (C)

Glass fibers surface-modified by acid modification (FT-2A manufactured by Owens Coming, average fiber diameter: 10.5 μm, average fiber length: 3 mm, sizing agent: a mixture of a polymer of maleic acid-containing unsaturated vinyl monomer and urethane resin)

1-4. Colorant (D)

A masterbatch containing 94 mass% of polyamide resin (A1) and 6 mass% of pigment was used as the resin.

1-5. Crystal nucleating agent (E)

Talc (fine particle talc, average particle diameter of 6 μm)

1-6. Lubricant (F)

Sodium montanate

2. Preparation of polyamide resin composition

(Examples 1 to 4 and Comparative Examples 1 to 3)

The above materials were mixed in a tumbler blender at the composition ratios (unit: parts by mass) as indicated in Table 1, and melt-kneaded using a 30 mmφ vent-type twin-screw extruder at a cylinder temperature of 300 to 335°C. Subsequently the kneaded product was extruded into strands and cooled in a water tank. Thereafter, the strands were collected by a pelletizer and cut to thereby obtain a polyamide resin composition in the form of pellets.

The content of the phosphorus element in the polyamide resin composition was measured by high-frequency inductively coupled plasma (ICP) emission spectrometry at a wavelength of 213.618 (nm) using an IRIS/IP device manufactured by Thermo Jarrell Ash.

3. Evaluation

The obtained polyamide resin compositions were evaluated with the following criteria.

3-1. Tracking resistance

Each of the obtained polyamide resin composition was injection molded under the following conditions to prepare a test piece of 120 mm × 130 mm × 3 mm.

Molding machine: SE75EV-A manufactured by Sumitomo Heavy Industries, Ltd.

Molding machine cylinder temperature: 335°C
Mold temperature: 160°C

The tracking resistance of the prepared test piece was evaluated in accordance with IEC60112. Specifically, using a YST-112 type tracking tester manufactured by Yamayo Testing Machine Co., Ltd., drops of test liquid A (0.1% aqueous ammonium chloride solution) were dropped every 30 seconds at 23 ± 2°C, 45 to 50% RH, and a measurement voltage range of 100 to 1,000 V, and whether tracking occurred on the test piece after 50 drops was confirmed. This operation was repeated with different voltages to determine the maximum voltage (CTI) at which the test piece did not break down after 50 drops without causing tracking. It was judged as passing when no tracking occurred even after 100 drops were dropped at a voltage 25V lower than this maximum voltage. The higher this maximum voltage, the better the tracking resistance. It was judged as satisfactory when the maximum voltage was 550V or more.

3-2. Flow length

Each of the obtained polyamide resin composition was injected using a bar flow mold with a width of 10 mm and a thickness of 0.5 mm under the following conditions, and the flow length (mm) of the polyamide resin composition in the mold was measured. A longer flow length indicates better injection flowability.

Molding machine: EC75N-2A manufactured by Shibaura Machine Co., Ltd.

Injection setting pressure: 2000 kg/$cm^2$
Molding machine cylinder temperature: 335°C
Mold temperature: 160°C

3-3. Retention ratio of flow length before and after adding phosphorus compound

The retention ratio of flow length before and after adding the phosphorus compound (B) was calculated by comparing the flow lengths of polyamide resin compositions including the same amounts of additives except that no phosphorus compound (B) was added to one of the polyamide resin compositions.

3-4. Bending strength

Each of the obtained polyamide resin composition was injection molded under the following conditions to prepare

a test piece with a thickness of 3.2 mm.

Molding machine: SE75EV-A manufactured by Sumitomo Heavy Industries, Ltd.

Molding machine cylinder temperature: 335°C
Mold temperature: 160°C

The prepared test piece was left for 24 hours at a temperature of 23°C under a nitrogen atmosphere. Subsequently, under an atmosphere of 23°C and 50% relative humidity, a bending test was conducted using a bending tester (AB5 manufactured by NTESCO) with a span of 51 mm and a bending speed of 12.7 mm/min, and the bending strength was measured.

3-5. Retention ratio of bending strength before and after adding phosphorus compound

The retention ratio of bending strength before and after adding the phosphorus compound (B) was calculated by comparing the bending strength of polyamide resin compositions including the same amounts of additives except that no phosphorus compound (B) was added to one of the polyamide resin compositions.

For the prepared polyamide resin compositions, Table 1 shows the composition, flow length and its retention ratio, and bending strength and its retention ratio. In addition, a graph plotting the obtained results is shown in the Figure. The horizontal axis of the graph in the Figure represents the phosphorus content (mass ppm) in the polyamide resin composition, the left vertical axis represents the bending strength (MPa), and the right vertical axis represents the maximum voltage CTI (V) at which no tracking failure occurs.

Table 1

| | | | Unit | Exam | Exam ple 2 | Exa mple 3 | Exa mple 4 | Comparative Example 1 | Comparative Example 2 | Comparative Example 3 |
|---|---|---|---|---|---|---|---|---|---|---|
| Composition ion | Polyamide resin (A) | | parts by mass | 58.40 | 56.40 | 58.3 5 | 55.4 0 | 59.40 | 54.40 | 51.40 |
| | Phosphorus compound (B) | | | 1 | 3 | 0.5 | 4 | 0 | 5 | 8 |
| | Glass fiber (C) | | | 35 | 35 | 35 | 35 | 35 | 35 | 35 |
| | Others | Colorant (D) | | 5 | 5 | 5 | 5 | 5 | 5 | 5 |
| | | Nucleating agent (E) | | 0.35 | 0.35 | 0.35 | 0.35 | 0.35 | 0.35 | 0.35 |
| | | Lubricant (F) | | 0.25 | 0.25 | 0.25 | 0.25 | 0.25 | 0.25 | 0.25 |
| | Phosphorus element content | | mass ppm | 220,0 | 6,200 | 900 | 9,00 0 | 200 | 10,200 | 16,200 |
| Evaluat ion | Tracking resistance | CTI | V | 600 | 700 | 575 | 700 | 525 | 750 | 825 |
| | Fluidity | Flow length Lt | mm | 21 | 22 | - | - | 19 | 23 | 24 |
| | | Retention ratio of flowability | - | 1.11 | 1.16 | - | - | 1 | 1.21 | 1.26 |
| | Mechanical properties | Bending strength | MPa | 290 | 290 | 292 | 289 | 292 | 285 | 278 |
| | | Retention ratio of bending strength | - | 0.99 | 0.99 | 1.00 | 0.99 | 1 | 0.97 | 0.95 |

As is clear from Table 1, the polyamide resin composition of Comparative Example 1, which does not contain the phosphorus compound (B), has low tracking resistance. On the other hand, the polyamide resin compositions of Comparative Examples 2 and 3, which contain a large amount of the phosphorus compound (B) such that the content of the phosphorus element in the polyamide resin composition exceeds 10,000 mass ppm, have high tracking resistance but a low retention ratio of the bending strength.

In contrast, the polyamide resin compositions of Examples 1 to 4, which contain a small amount of the phosphorus compound (B) such that the content of the phosphorus element is 10,000 mass ppm or less, exhibit high tracking resistance while maintaining high bending strength.

From the Figure, which plots these results, it is also evident that when the phosphorus element content exceeds around 8,000 mass ppm, the bending strength decreases sharply, whereas when the phosphorus element content is 8,000 mass ppm or less, the decrease in bending strength is significantly small, while maintaining a CTI of 550V or more.

These findings indicate that when a small amount of the phosphorus compound (B) is included such that the phosphorus element content is 10,000 mass ppm or less, more preferably 8,000 mass ppm or less, the tracking resistance can be increased while the bending strength of the polyamide resin composition is satisfactorily maintained.

This application is entitled to and claims the benefit of Japanese Patent Application No. 2023-16026, filed on February 6, 2023, the disclosure of which including the specification and drawing is incorporated herein by reference in its entirety.

Industrial Applicability

The present invention can provide a polyamide resin composition that has high tracking resistance while maintaining satisfactory mechanical strength. Therefore, the present invention is expected to expand the applicability of polyamide resins to various applications and contribute to the further spread of polyamide resins.

## Claims

**1.** A polyamide resin composition, comprising:

a polyamide resin (A) having a melting point of 280°C or higher as measured by a differential scanning calorimeter (DSC);
a phosphorus compound (B); and
a glass fiber (C) including a surface treatment agent or a sizing agent,
wherein
a content of a phosphorus element in the polyamide resin composition is 500 mass ppm or more and 10,000 mass ppm or less with respect to the polyamide resin composition.

**2.** The polyamide resin composition according to claim 1, wherein
the surface treatment agent or the sizing agent has an acidic group.

**3.** The polyamide resin composition according to claim 2, wherein
the acidic group is a carboxy group, an acid anhydride group, or a carboxylic acid ester group.

**4.** The polyamide resin composition according to claim 2 or 3, wherein
the surface treatment agent or the sizing agent includes a urethane resin and a compound having the acidic group.

**5.** The polyamide resin composition according to any one of claims 1 to 4, wherein
the phosphorus compound (B) includes a phosphinate compound.

**6.** The polyamide resin composition according to claim 5, wherein

the phosphinate compound is at least one member selected from the group consisting of compounds represented by Formula (I), compounds represented by Formula (II), and condensates thereof:

[Chemical Formula 1]

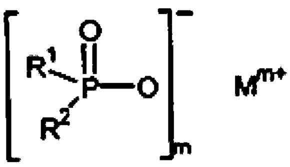

… Formula (I)

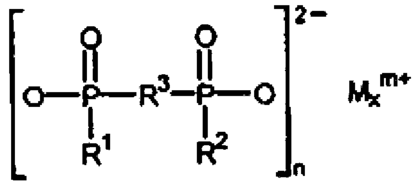

… Formula (II)

[In Formula (I) and Formula (II),

$R^1$ and $R^2$ are each a C1-C6 alkyl group or an aryl group,
$R^3$ is a C1-C10 alkylene group, a C6-C10 arylene group, a C6-C10 alkylarylene group, or a C6-C10 arylalkylene group,
M is one member selected from the group consisting of Mg, Ca, Al, Sb, Sn, Ge, Ti, Zn, Fe, Zr, Ce, Bi, Sr, Mn, Li, Na, K, and protonated nitrogen bases, and
m represents an integer of 1 to 4, n represents an integer of 1 to 4, and x represents an integer of 1 to 4].

**7.** The polyamide resin composition according to any one of claims 1 to 6, wherein the phosphorus compound (B) includes aluminum diethylphosphinate.

**8.** The polyamide resin composition according to any one of claims 1 to 7, wherein a heat of fusion (ΔH) of the polyamide resin (A) as measured by differential scanning calorimeter (DSC) is 10 J/g or more.

**9.** The polyamide resin composition according to any one of claims 1 to 8, wherein:

the polyamide resin (A) includes a dicarboxylic acid-derived component unit (Aa) and a diamine-derived component unit (Ab); and
the dicarboxylic acid-derived component unit (Aa) includes a component unit derived from an aromatic dicarboxylic acid.

**10.** The polyamide resin composition according to any one of claims 1 to 9, wherein:

the polyamide resin (A) includes a dicarboxylic acid-derived component unit (Aa) and a diamine-derived component unit (Ab); and
the dicarboxylic acid-derived component unit (Aa) includes a component unit derived from terephthalic acid and a component unit derived from isophthalic acid.

**11.** The polyamide resin composition according to any one of claims 1 to 10, wherein a content of the phosphorus compound (B) is 0.5 mass% or more and less than 5 mass% with respect to the polyamide resin composition.

**12.** The polyamide resin composition according to any one of claims 1 to 11, wherein a content of the glass fiber (C) is 25 mass% or more and 60 mass% or less with respect to the polyamide resin composition.

**13.** A molded article, comprising:

the polyamide resin composition according to any one of claims 1 to 12.

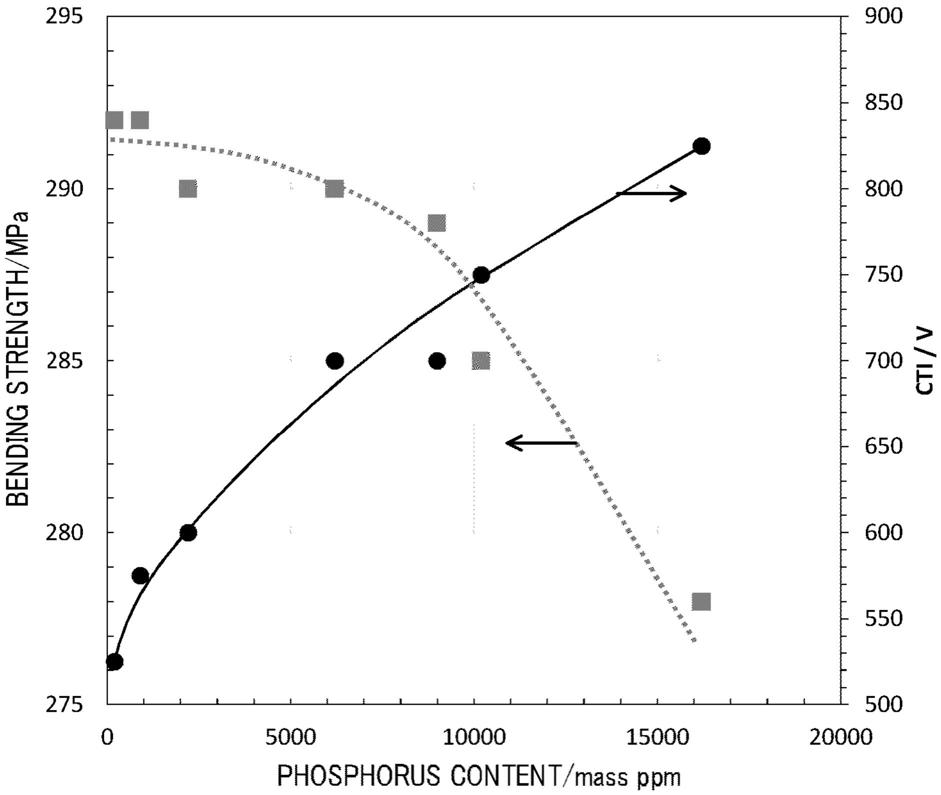
295
290
285
280
275
BENDING STRENGTH/MPa
900
850
800
750
700
650
600
550
500
CTI / V
0
5000
10000
15000
20000
PHOSPHORUS CONTENT/mass ppm

Figure

# INTERNATIONAL SEARCH REPORT

International application No.
**PCT/JP2024/003882**

## A. CLASSIFICATION OF SUBJECT MATTER

***C08L 77/06***(2006.01)i; ***C08G 69/26***(2006.01)i; ***C08K 5/5313***(2006.01)i; ***C08K 7/14***(2006.01)i; ***C08K 9/04***(2006.01)i; ***C08K 9/08***(2006.01)i
FI: C08L77/06; C08K5/5313; C08K7/14; C08G69/26; C08K9/04; C08K9/08

According to International Patent Classification (IPC) or to both national classification and IPC

## B. FIELDS SEARCHED

Minimum documentation searched (classification system followed by classification symbols)

C08L77/06; C08G69/26; C08K5/5313; C08K7/14; C08K9/04; C08K9/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

## C. DOCUMENTS CONSIDERED TO BE RELEVANT

| Category* | Citation of document, with indication, where appropriate, of the relevant passages | Relevant to claim No. |
|---|---|---|
| X | JP 2016-164206 A (TORAY INDUSTRIES, INC.) 08 September 2016 (2016-09-08) claims, paragraphs [0018], [0083]-[0092], examples | 1, 5-13 |
| A | JP 2018-095852 A (UNITIKA LTD.) 21 June 2018 (2018-06-21) claims, examples | 1-13 |
| A | CN 112662172 A (ZHUHAI WANTONG SPECIAL ENGINEERING PLASTIC CO., LTD.) 16 April 2021 (2021-04-16) claims, examples | 1-13 |
| A | JP 2004-292531 A (ASAHI KASEI CHEMICALS CORPORATION) 21 October 2004 (2004-10-21) claims, examples | 1-13 |
| A | JP 2017-095670 A (TORAY INDUSTRIES, INC.) 01 June 2017 (2017-06-01) claims, examples | 1-13 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 April 2024** | **16 April 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/003882**

| Patent document cited in search report | | | Publication date (day/month/year) | Patent family member(s) | Publication date (day/month/year) |
|---|---|---|---|---|---|
| JP | 2016-164206 | A | 08 September 2016 | (Family: none) | |
| JP | 2018-095852 | A | 21 June 2018 | (Family: none) | |
| CN | 112662172 | A | 16 April 2021 | (Family: none) | |
| JP | 2004-292531 | A | 21 October 2004 | (Family: none) | |
| JP | 2017-095670 | A | 01 June 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008081878 A
- JP 2004292531 A
- WO 03085029 A
- JP 2023016026 A